# EUROPÄISCHE PATENTANMELDUNG

(11) **EP 1 109 383 A2**
(43) Veröffentlichungstag der Anmeldung: **20.06.2001**
(21) Anmeldenummer: 00127170.9
(22) Anmeldetag: 12.12.2000
(51) Int. Cl.: H04M 3/00, H04M 7/00, H04M 3/42

(54) **Vermittlungsanlage mit einer Schnittstelle für den Empfang von Steuerbefehlen**

(30) Priorität: 18.12.1999 DE 19961288
(71) Anmelder: Tenovis GmbH & Co. KG, 60326 Frankfurt (DE)
(72) Erfinder: Haack, Reiner, Canada, TOG 1EO (CA)
(74) Vertreter: Bohnenberger, Johannes, Dr.

(57) **Zusammenfassung**

Ein Telekommunikationssystem umfaßt eine Vermittlungsanlage (1) mit einer Mehrzahl von Anschlüssen (11) für Endgeräte (2) und einer Schnittstelle (9) für den Empfang von Steuerbefehlen von einer externen Steuereinheit (13). Die Vermittlungsanlage ist eingerichtet, von der Schnittstelle (9) empfangene Steuerbefehle transparent an wenigstens einen Anschluss (11) für ein Endgerät (2) auszugeben.

## Beschreibung

Die vorliegende Erfindung betrifft eine Vermittlungsanlage für ein Telekommunikationssystem, die eine Mehrzahl von Anschlüssen für Endgeräte und eine Schnittstelle für den Empfang von Steuerbefehlen von einer externen Steuereinheit aufweist. Sie betrifft ferner ein Telekommunikationssystem, das eine solche Vermittlungsanlage aufweist.

### Stand der Technik

Moderne Telekommunikationsendgeräte machen für den Benutzer eine Vielzahl von Sonderfunktionen verfügbar, die mit den Eingabemöglichkeiten eines solchen Endgeräts wie etwa eines Telefons nicht mehr adäquat zu steuern sind, oder die eine Zusammenarbeit zwischen dem Endgerät und einer Vermittlungsanlage erfordern, an die das Endgerät angeschlossen ist.

Beispiele solcher Funktionen sind zum Beispiel computerunterstütztes Wählen, bei dem ein Benutzer aus einer am Bildschirm eines Arbeitsplatzrechners angezeigten Datenbank einen gewünschten Gesprächspartner auswählen kann und das Endgerät die Gesprächsverbindung zu dem Gesprächspartner anhand der von der Datenbank zur Verfügung gestellten Daten aufbaut, ohne dass noch eine Eingabe der Rufnummer von Hand durch den Benutzer notwendig ist. Ein anderes Beispiel ist die Etablierung von Rufumleitungen. Es ist beschwerlich und fehlerträchtig, jedesmal, wenn eine Rufumleitung etabliert werden soll, eine Zielrufnummer von Hand einzugeben. Eine Auswahl der Zielrufnummer aus einer möglicherweise umfangreichen Datenbank setzt aber voraus, dass diese in übersichtlicher Weise angezeigt werden kann. Auch hier läßt sich die Benutzung des Endgeräts dadurch vereinfachen, dass die entsprechenden Einstellungen an einem Computer vorgenommen werden können und von diesem an das Endgerät übertragen werden.

Steuerfunktionen dieser Art, die von einem Benutzer eines Endgeräts mit Wirkung für sein eigenes Endgerät vorgenommen werden, werden unter dem Begriff First Party Control zusammengefasst.

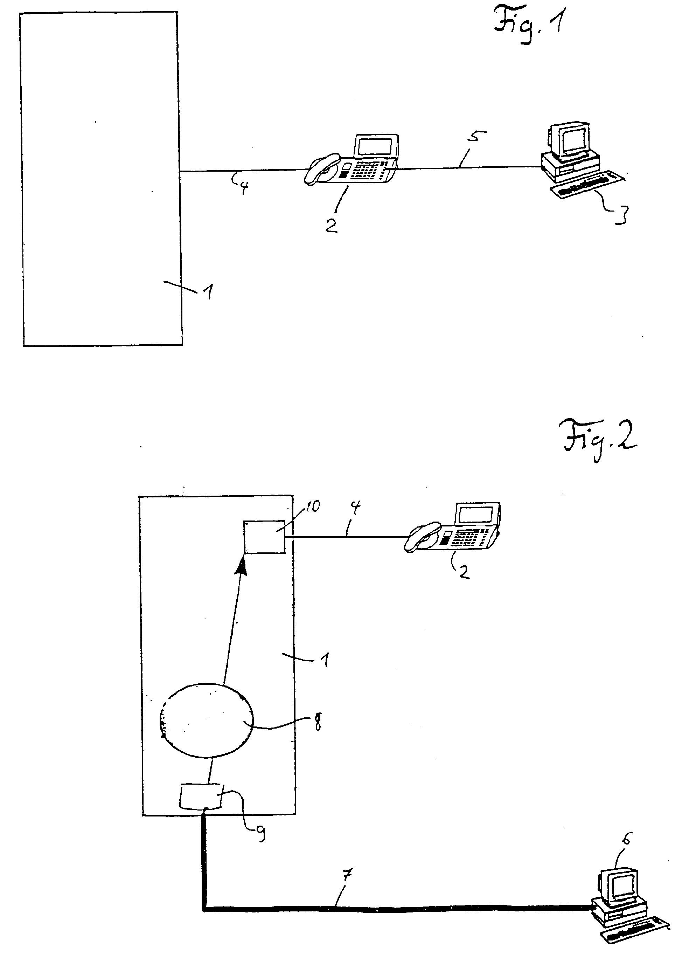

Figur 1 zeigt das Prinzip herkömmlicher First Party Control. Eine Vermittlungsanlage 1 und ein Endgerät 2 sind über eine Telefonleitung 4 verbunden, auf der Nutzdaten und Signalisierungsmeldungen austauschbar sind. Eine Datenleitung 5, zum Beispiel eine serielle Übertragungsleitung, verbindet zwei (nicht dargestellte) Schnittstellen des Endgeräts 2 und eines Computers 3. Der Computer 3 ist eingerichtet, eine Applikation auszuführen, die in der Lage ist, Steuerbefehle über die Datenleitung 5 an das Endgerät 2 zu schicken, die die Arbeitsweise des Endgeräts 2 beeinflussen. Für die Vermittlungsanlage 1 ist nicht erkennbar, ob über die Telefonleitung 4 von dem Endgerät 2 empfangene Signalisierungsmeldungen auf eine Eingabe des Benutzers am Endgerät 2 selbst oder auf einen Befehl zurückgehen, den das Endgerät 2 vom Computer 3 empfangen hat.

Bei den herkömmlichen Telekommunikationssystemen mit First Party Control muss jedes Telefon, das First-Party-gesteuert werden soll, eine Computerschnittstelle haben, und an diese Schnittstelle muss der die Steuerung ausübende Rechner, wiederum über eine eigene Schnittstelle, angeschlossen sein. Dies macht First Party Control aufwendig sowohl hinsichtlich der Anschaffungskosten als auch der zu seiner Installation erforderlichen Arbeiten.

Es gibt eine Vielzahl von Sonderfunktionen, die sich nicht für First Party Control eignen. Beispiele solcher Sonderfunktionen sind der Aufbau einer Gesprächsverbindung zu einem auswärtigen Gesprächspartner durch eine Hilfsperson und Übergabe der bestehenden Rückgesprächsverbindung an den Auftraggeber. Die für derartige, als Third Party Control bezeichnete Vorgänge erforderliche Signalisierung zwischen mehreren beteiligten Endgeräten muss über eine Vermittlungsanlage erfolgen, an die die Endgeräte angeschlossen sind. Diese Vermittlungsanlage muss dazu in der Lage sein, diese Vorgänge zu unterstützen; das heißt sie muss in der Lage sein, Signalisierungsmeldungen von dem Endgerät, das Third Party Control ausübt, zu erkennen und diese Meldungen korrekt verarbeiten.

Jede Funktion, die durch Third Party Control implementiert wird, erhöht daher den Entwicklungsaufwand und infolgedessen auch die Kosten der Telekommunikationsanlage.

Bei dem in Figur 2 schematisch dargestellten Prinzip des Third Party Control kommuniziert ein Prozessor 8 der Vermittlungsanlage 1 über eine erste Schnittstelle 9 und eine Datenleitung 7 mit einem externen Steuercomputer 6. Der Prozessor 8 empfängt von diesem Befehle, die er auswerten muss, um dann entsprechende Aktivitäten der Vermittlungsanlage 1 und gegebenenfalls auch eines daran angeschlossenen Endgeräts 2 zu veranlassen.

Eine Schnittstelle 10 am Anschluß des Endgeräts 2 an der Vermittlungsanlage 1 setzt für das Endgerät bestimmte Signalisierungsmeldungen des Prozessors 8 in ein auf der Telefonleitung 4 übertragbares Signalformat um.

### Vorteile der Erfindung

Durch die vorliegende Erfindung werden eine Vermittlungsanlage und ein Telekommunikationssystem geschaffen, die es erlauben, die Vorteile von First Party Control und Third Party Control gleichzeitig zu realisieren, ohne dass dabei die oben beschriebenen Nachteile in Kauf genommen werden müssen.

Dies wird zum einen erreicht durch eine Vermittlungsanlage für ein Telekommunikationssystem mit einer Mehrzahl von Anschlüssen für Endgeräte und einer Schnittstelle für den Empfang von Steuerbefehlen von einer externen Steuereinheit, die dadurch gekennzeichnet ist, dass die Vermittlungsanlage eingerichtet ist, von der Schnittstelle empfangene Steuerbefehle transparent an wenigstens einen Anschluß für ein Endgerät auszugeben.

Diese Gestaltung der Vermittlungsanlage trägt der Tatsache Rechnung, dass bei vielen Anwendern Computer, die zur Ausübung von First Party Control an einem Endgerät eingesetzt werden, gleichzeitig Teil eines Computernetzwerks sind. Um Steuerbefehle für First Party Control an ein Endgerät zu übertragen, ist es daher ausreichend, wenn im wesentlichen nur die Vermittlungsanlage eine Schnittstelle für den Empfang dieser Steuerbefehle enthält und in der Lage ist, über diese Schnittstelle empfangene Steuerbefehle an dasjenige Endgerät oder diejenigen Endgeräte auszugeben, für die sie bestimmt sind. Da es sich bei den First Party Control-Steuerbefehlen um solche handelt, die (zumindest zuerst) von dem betreffenden Endgerät auszuführen sind, erfordert diese zusätzliche Fähigkeit der Vermittlungsanlage keinen hohen Entwicklungsaufwand: es genügt, dass die Vermittlungsanlage in der Lage ist, die Befehle mit unverändertem Inhalt an die Empfängerendgeräte weiterzuleiten. Die Vermittlungsanlage ist also für diese Befehle transparent; ihre Wirkung besteht allenfalls darin, die vom Netzwerk empfangenen Befehle in ein Protokoll umzusetzen, das von den an sie angeschlossenen Endgeräten verstanden wird.

Welche Funktionen in den Endgeräten diese Befehle auslösen, ist für die Vermittlungsanlage belanglos. Eine solche Vermittlungsanlage kann daher auch problemlos mit Endgeräten zusammenarbeiten, die jünger sind als sie selber und in der Lage sind, First Party-gesteuerte Funktionen auszuführen, die zur Zeit der Herstellung der Vermittlungsanlage noch gar nicht bekannt waren.

Die Vorteile der Erfindung werden ferner erreicht durch ein Telekommunikationssystem, das eine Vermittlungsanlage der oben beschriebenen Art sowie eine Steuereinheit dafür umfaßt. Um den Bedienungskomfort herkömmlicher First Party Control-Lösungen zu bewahren, ist es bevorzugt, dass die Steuereinheit über Mittel zur Eingabe von Steuerbefehlen durch einen Benutzer verfügt, die jeweils in örtlicher Nachbarschaft zu dem Endgerät dieses Benutzers angeordnet sind.

Wie oben bereits angedeutet, kann es sich bei der Steuereinheit zweckmäßigerweise um ein Computernetzwerk handeln, und die Mittel zur Eingabe von Steuerbefehlen sind ein Computer dieses Netzwerks.

An die Schnittstelle des Telekommunikationssystem kann auf Seiten der Steuereinheit vorteilhafterweise ein Telefonieserver vorgesehen sein. Ein solcher Telefonieserver kann in Art eines Call-Centers eintreffende Anrufe einem Endgerät zuweisen, Statistiken über geführte Gespräche führen etc.

Bei einer bevorzugten Weiterentwicklung des erfindungsgemäßen Telekommunikationssystems sind zusätzlich direkt an das Netzwerk angeschlossene und über dieses miteinander kommunikationsfähige Endgeräte, als Netzwerkendgeräte bezeichnet, vorgesehen, und das Netzwerk ist mit einem Anschluß der Vermittlungsanlage verbunden, um Steuerbefehle der Vermittlungsanlage auch für die Netzwerkendgeräte zu empfangen und an sie weiterzuleiten. Auf diese Weise sind auch die Netzwerkendgeräte der Steuerung durch die Vermittlungsanlage unterworfen.

Als Bindeglied zwischen der Vermittlungsanlage und dem Netzwerk für den Austausch von Nutzdaten zwischen den Netzwerkendgeräten und der Vermittlungsanlage und für die Übermittlung von Steuerbefehlen der Vermittlungsanlage an die Netzwerkendgeräte ist vorzugsweise ein Voice-over-IP-Server vorgesehen.

Weitere Merkmale und Vorteile der Erfindung ergeben sich aus der nachfolgenden Beschreibung von Ausführungsbeispielen mit Bezug auf die Figuren.

### Figuren

Es zeigen:
- Figur 1: das Zusammenwirken einer Vermittlungsanlage, eines Endgeräts und eines Computers in einer herkömmlichen CTI-Umgebung mit First Party Control;
- Figur 2: ein Prinzip-Schema für herkömmliche Third Party Control;
- Figur 3: ein Prinzip-Schema für First Party Control gemäß der vorliegenden Erfindung; und
- Figur 4: ein Ausführungsbeispiel eines Telekommunikationsnetzes gemäß der Erfindung.

### Beschreibung der Ausführungsbeispiele

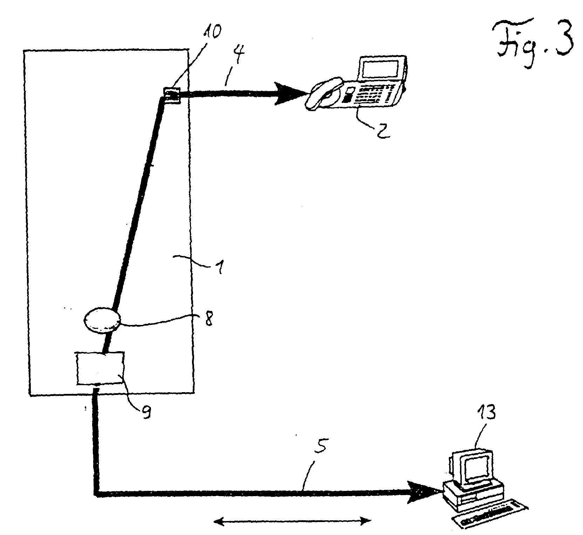

Figur 3 veranschaulicht das Prinzip der First Party Control gemäß der vorliegenden Erfindung. Eine externe Steuereinheit 13, auf der eine Applikation für First Party Control lauffähig ist, ist direkt an eine Schnittstelle 9 einer Vermittlungsanlage 1 angeschlossen. Die Schnittstelle 9 empfängt Befehle der Steuereinheit 13 und leitet sie an einen Steuerprozessor 8 der Vermittlungsanlage 1 weiter. Wenn die Schnittstelle 9 nur zum Empfang von First Party Control-Befehlen vorgesehen ist, braucht dieser Prozessor 8 nichts anderes zu tun, als zu ermitteln, für welchen der diversen Endgeräteanschlüsse der Vermittlungsanlage 1 ein empfangener Befehl bestimmt ist, und den Befehl an eine Schnittstelle 10 des entsprechenden Anschlusses weiterzuleiten, wo er in ein über eine Telefonleitung 4 zu einem Empfänger-Endgerät 2 übertragbares Format umgesetzt wird. Die Aktionen, die das Endgerät 2 bei Empfang des Befehls ausführen wird, braucht die Vermittlungsanlage 1 beziehungsweise der Prozessor 8 nicht zu kennen. Alle über die Leitung 5 von der Steuereinheit 13 empfangenen First Party Control-Befehle werden von der Vermittlungsanlage 1 in der gleichen Weise wie oben beschrieben verarbeitet.

Die Steuereinheit 13 kann auch in der Lage sein, wie der Steuercomputer 6 der Figur 2 Third Party Control-Befehle an die Vermittlungsanlage 1 zu senden. In diesem Fall muss der Prozessor 8 zusätzlich in der Lage sein, First Party Control Befehle von Third Party Control-Befehlen zu unterscheiden, und nur die ersteren unverändert an den entsprechenden Anschluß weiterzuleiten, wohingegen letztere von der Vermittlungsanlage 1 selbst ausgeführt werden.

Der Entwicklungsaufwand, der erforderlich ist, um eine herkömmliche Vermittlungsanlage 1 in die Lage zu versetzen, First Party Control-Befehle im Sinne der vorliegenden Erfindung weiterzuleiten, ist gering. Er ist in jedem Fall geringer als wenn man versuchen wollte, die Vermittlungsanlage 1 in die Lage zu versetzen, First Party Control-Befehle selbsttätig auszuführen.

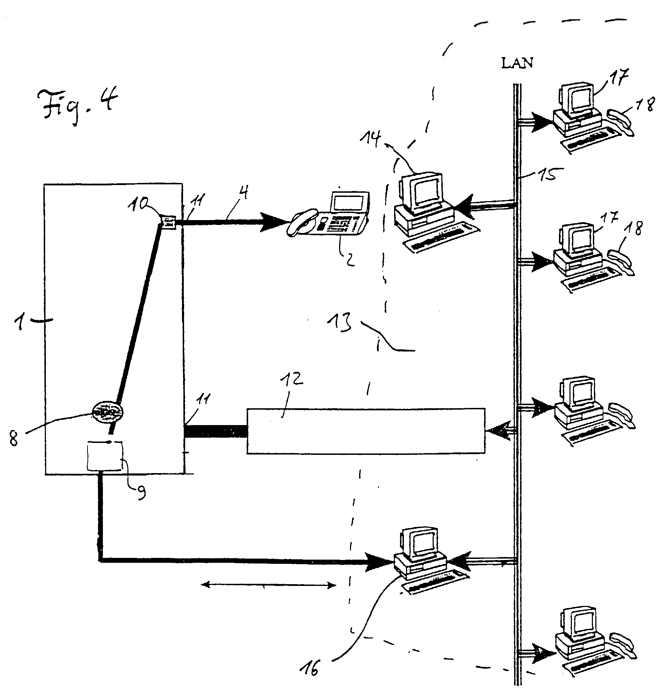

Figur 4 zeigt ein Ausführungsbeispiel eines Telekommunikationssystems gemäß der vorliegenden Erfindung. Es umfaßt eine Vermittlungsanlage 1 mit einer Mehrzahl von Anschlüssen 11 für Endgeräte, von denen in der Figur nur zwei beispielhaft dargestellt sind. An einen dieser Anschlüsse 11 ist als Endgerät 2 ein Telefon angeschlossen; an dem anderen Anschluss 11 befindet sich ein sogenannter Voice-over-IP-Server 12, auf dessen Funktion später noch eingegangen wird. Die Steuereinheit 13 besteht hier aus einem Computernetzwerk, das unter anderem einen in der Nähe des Endgeräts 2 angeordneten Arbeitsplatzrechner 14 umfaßt. Auf dem Arbeitsplatzrechner 14 ist eine Applikation lauffähig, mit deren Hilfe der Arbeitsplatzrechner 14 First Party Control-Befehle erzeugen und aussenden kann. Insoweit entspricht er hinsichtlich seiner Funktion und Aufgabe dem Computer 3 aus Figur 1. Allerdings ist der Arbeitsplatzrechner 14 nicht mit dem Endgerät 2 direkt verbunden. Vielmehr sendet er erzeugte First Party Control-Befehle über einen Datenbus 15 des Netzwerks an einen Telefonieserver 16, der ein Bindeglied zwischen dem Netzwerk und der Vermittlungsanlage 1 darstellt. Dieser setzt auf dem Bus 15 vom Arbeitsplatzrechner 14 empfangene Befehle in eine für die Verarbeitung durch die Vermittlungsanlage 1 geeignete Form um und leitet sie an diese weiter. Signalisierungsinformationen, die das Endgerät 2 nach Empfang eines Steuerbefehls aussendet, werden vom Telefonieserver 16 an den Arbeitsplatzrechner 14 zurückgeleitet, um dessen Applikation über den Stand der Ausführung der mittels First Party Control-Befehl angeforderten Operation zu informieren. Anhand der durch ihn zirkulierenden Informationen ist der Telefonieserver 16 zum Beispiel in der Lage, Statistiken über die geführten Gespräche zu führen. Des Weiteren kann er selber Steueraufgaben für die Vermittlungsanlage 1 übernehmen, insbesondere die Erzeugung von Third Party Control-Befehlen für diese.

Figur 4 zeigt der Einfachheit halber nur ein Endgerät 2 mit zugeordnetem Arbeitsplatzrechner 24. Es liegt jedoch auf der Hand, dass die Vorteile der vorliegenden Erfindung um so mehr zum Tragen kommen, je größer die Zahl der Endgeräte und Rechner innerhalb eines Telekommunikationssystems ist.

Beim Ausführungsbeispiel der Figur 4 sind an das Netzwerk nicht nur Arbeitsplatzrechner wie der Rechner 14 angeschlossen, sondern auch Arbeitsplatzrechner 17 mit einem integrierten sogenannten IP-Telefon 18. Netzwerke mit solchen IP-Telefonen sind bekannt. Sie verfügen üblicherweise über den bereits oben erwähnten Voice-over-IP-Server 12, der für den Austausch von Nutzsignalen, also insbesondere von Tonsignalen eines Gesprächs, zwischen einem IP-Telefon 18 und einem an die Vermittlungsanlage 1 angeschlossenen Endgerät wie dem Endgerät 2 oder einem an ein öffentliches Fernmeldenetz angeschlossenen Endgerät vorgesehen ist. Bei herkömmlichen Netzwerken können diese IP-Telefone 18 miteinander Kontakt aufnehmen, ohne dass eine an das Netzwerk angeschlossene Vermittlungsanlage in der Lage ist, dies zu erkennen. Dies erschwert erheblich den Aufbau von kombinierten Telekommunikationssystemen, die sowohl direkt an eine Vermittlungsanlage angeschlossene Endgeräte wie das Endgerät 2 als auch IP-Endgeräte aufweisen.

Bei dem System nach Figur 4 ist jedoch vorgesehen, dass der Telefonierserver 16, der an den Datenbus 15 angeschlossen ist, über den die IP-Telefone 18 miteinander kommunizieren können, über diesen Bus auch die Aktivität der IP-Telefone 18 überwacht und Daten über den jeweiligen Status dieser IP-Telefone, wie etwa besetzt oder frei, fortlaufend an die Vermittlungsanlage 1 meldet. Die Vermittlungsanlage wiederum gibt Signalisierungsmeldungen, die für ein IP-Telefon 18 bestimmt ist, über den Anschluss 11 des Voice-over-IP-Servers 12 an letzteren aus. Bei diesem Anschluß 11 kann es sich um einen herkömmlichen Telefonieanschluss, zum Beispiel einen S2M-Anschluss handeln. Das heißt die Vermittlungsanlage 1 behandelt den Voice-over-IP-Server genauso wie ein beliebiges Endgerät, das in der Lage ist, eine Mehrzahl von Übertragungs-verbindungen gleichzeitig zu unterhalten.

Der Voice-over-IP-Server 12 setzt die empfangenen Meldungen in ein für die Übertragung auf dem Bus 15 geeignetes Format um und gibt sie auf diesen aus. Jedes IP-Telefon 18 kann auf diese Weise für es bestimmte Signalisierungsinformation empfangen. Die Vermittlungsanlage 1 muss beim Senden von Signalisierungsmeldungen nicht berücksichtigen, ob der Empfänger ein direkt angeschlossenes Endgerät 2 oder ein IP-Endgerät 18 ist. Die Umsetzung der Signalisierungsinformation in ein für die Übertragung auf den Bus 15 geeignetes Format wird von dem Voice-over-IP-Server 12 vorgenommen, der die gleiche Aufgabe auch für von der Vermittlungsanlage 1 an eines der IP-Telefone 18 übertragene Nutzinformation erledigt.

Ein Benutzer des Endgeräts 2 und des Arbeitsplatzrechners 14 ist gemäß der vorliegenden Erfindung in der Lage, alle First Party Control-Funktionen, für die bislang eine direkte Kabelverbindung zwischen Arbeitsplatzrechner und Endgerät erforderlich war, ohne eine solche Kabelverbindung auszuführen. Insbesondere bei Anwendern, die umfangreiche Computernetze und Telekommunikationssysteme mit einer Vielzahl von Endgeräten betreiben, lassen sich auf diese Weise erhebliche Einsparungen beim Aufbau einer Telekommunikationsanlage erzielen. Gleichzeitig wird die gemeinsame Nutzung von direkt an eine Vermittlungsanlage angeschlossenen Endgeräten und Netzwerkendgeräten, die mit der Vermittlungsanlage allenfalls mittelbar über einen Datenbus eines Computernetzes verbunden sind, vereinfacht.

## Patentansprüche

1. Vermittlungsanlage (1) für ein Telekommunikationssystem, mit einer Mehrzahl von Anschlüssen (11) für Endgeräte (2) und einer Schnittstelle (9) für den Empfang von Steuerbefehlen von einer externen Steuereinheit (13), **dadurch gekennzeichnet**, dass die Vermittlungsanlage (1) eingerichtet ist, von der Schnittstelle (9) empfangene Steuerbefehle transparent an wenigstens einem Anschluß (11) für ein Endgerät auszugeben.

2. Telekommunikationssystem mit einer Vermittlungsanlage nach Anspruch 1, mit wenigstens einem angeschlossenen Endgerät (2) und einer Steuereinheit (13), **dadurch gekennzeichnet**, dass die Steuereinheit (13) über Mittel (14) zur Eingabe von Steuerbefehlen durch einen Benutzer verfügt, die in örtlicher Nachbarschaft zu dem Endgerät (2) angeordnet ist.

3. Telekommunikationssystem nach Anspruch 2, **dadurch gekennzeichnet**, dass die Steuereinheit (13) ein Computernetzwerk ist und dass das Mittel zur Eingabe von Steuerbefehlen ein Computer (14) des Netzwerks (13) ist.

4. Telekommunikationssystem nach Anspruch 3, **dadurch gekennzeichnet**, dass ein Telefonieserver (16) zwischen der Schnittstelle (9) und dem Netzwerk (13) angeordnet ist.

5. Telekommunikationssystem nach Anspruch 3 oder 4, **dadurch gekennzeichnet**, dass es ferner direkt an das Netzwerk angeschlossene und über das Netzwerk miteinander kommunikationsfähige Netzwerkendgeräte (18) umfaßt, und dass das Netzwerk (13) mit einem Anschluss (11) der Vermittlungsanlage (1) verbunden ist, um Steuerbefehle der Vermittlungsanlage (1) auch für die Netzwerkendgeräte (18) zu empfangen und an sie weiterzuleiten.

6. Telekommunikationsanlage nach Anspruch 5, **dadurch gekennzeichnet**, dass das Netzwerk (13) einen Voice-over-IP-Server (12) für den Austausch von Nutzdaten zwischen den Netzwerkendgeräten (18) und der Vermittlungsanlage (1) und für die Übermittlung von Steuerbefehlen der Vermittlungsanlage (1) an die Netzwerkendgeräte (18) umfaßt.
